(19) Europäisches Patentamt
European Patent Office
Office européen des brevets

(11) **EP 3 654 485 B1**

(12) **FASCICULE DE BREVET EUROPEEN**

(45) Date de publication et mention de la délivrance du brevet:
**11.08.2021 Bulletin 2021/32**

(51) Int Cl.:
*H02J 3/46* *(2006.01)*     *G06F 17/40* *(2006.01)*
*H02J 3/38* *(2006.01)*     *H02J 3/48* *(2006.01)*

(21) Numéro de dépôt: **19207140.5**

(22) Date de dépôt: **05.11.2019**

(54) **PROCÉDÉS DE DÉTERMINATION DES PARAMÈTRES DE PILOTAGE DE N GÉNÉRATEURS ÉLECTRIQUES, PROCÉDÉ DE PILOTAGE DE N GÉNÉRATEURS ET SYSTÈME METTANT EN OEUVRE LESDITS PROCÉDÉS**

VERFAHREN ZUM BESTIMMEN DER STEUERPARAMETER VON N ELEKTRISCHEN GENERATOREN, VERFAHREN ZUM STEUERN VON N GENERATOREN UND SYSTEM ZUR DURCHFÜHRUNG DIESER VERFAHREN

METHODS FOR DETERMINING THE CONTROL PARAMETERS OF N ELECTRICAL GENERATORS, METHOD FOR CONTROLLING N GENERATORS AND SYSTEM IMPLEMENTING THESE METHODS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2018 FR 1860457**

(43) Date de publication de la demande:
**20.05.2020 Bulletin 2020/21**

(73) Titulaire: **Commissariat à l'Energie Atomique et aux Energies Alternatives**
**75015 Paris (FR)**

(72) Inventeur: **HA, Duy Long**
**38054 GRENOBLE CEDEX 9 (FR)**

(74) Mandataire: **Cabinet Camus Lebkiri**
**25 rue de Maubeuge**
**75009 Paris (FR)**

(56) Documents cités:
**EP-A1- 3 012 939**     **WO-A2-2011/128344**
**US-A1- 2013 342 020**     **US-A1- 2014 152 007**
**US-B1- 6 681 155**

EP 3 654 485 B1

**Description**

**DOMAINE TECHNIQUE DE L'INVENTION**

Le domaine technique de l'invention est celui du pilotage d'une pluralité de générateurs électriques. La présente invention concerne un procédé de détermination des paramètres de pilotage de N générateurs électriques, un procédé de pilotage de N générateurs et un système mettant en œuvre lesdits procédés.

**ARRIERE-PLAN TECHNOLOGIQUE DE L'INVENTION**

De manière générale, lorsqu'un micro réseau est alimenté par une pluralité de générateurs électriques, il est connu de contrôler manuellement l'activation et la désactivation des générateurs électriques en fonction de la puissance demandée sur le réseau. Plus précisément, en fonction de cette puissance demandée, un opérateur va décider du nombre de générateurs à allumer. Dans des procédés automatisés, l'opérateur fixe un seuil au-delà duquel un générateur donné va s'activer ce qui permet de répondre de manière automatique à une modification de la puissance demandée. Cette stratégie comporte cependant quelques inconvénients. Tout d'abord, elle ne prend pas en compte la courbe de rendement du générateur électrique (autrement dit la consommation de carburant par unité d'énergie électrique produite) ce qui ne permet pas d'optimiser la consommation en carburant. De plus, elle ne prend pas en compte la température des générateurs, ce qui peut conduire à un échauffement desdits générateurs pouvant conduire à une dégradation voire à des problèmes de sécurité incendie. Enfin, elle ne permet pas de tenir compte d'une puissance de réserve facilement mobilisable nécessaire dans certaines applications.

Il existe donc un besoin d'un procédé de pilotage permettant de tenir compte du rendement de chaque générateur et de prendre en compte leur température tout en s'assurant qu'une puissance de réserve est disponible.

On identifie enfin ici le document de brevet US2014/152007A1 qui décrit un procédé de détermination des paramètres de pilotage de plusieurs générateurs électriques à un instant donné. D1 est muet sur une puissance de réserve ou d'une répartition équitable de la puissance.

**RESUME DE L'INVENTION**

L'invention offre une solution aux problèmes évoqués précédemment, en permettant de fournir des consignes de pilotage qui sont fonction d'une puissance demandée et d'une puissance de réserve, et qui prennent en compte le rendement des générateurs voire la température de ces derniers.

Un premier aspect de l'invention concerne un procédé de détermination des paramètres de pilotage de *N* générateurs électriques à un instant t, ledit procédé comprenant, pour une puissance demandée

$$P_{tot}(t) = \sum_{i=1}^{N} P_i(t)$$ à un instant t avec $P_i(t)$ la puissance électrique fournie par le générateur électrique *i* à l'instant t et une puissance de réserve $P_{reserve}(t) \leq \sum_{i=1}^{N}(P_i^{max} - P_i(t)) \times \delta_i(t)$ à un instant t avec $P_i^{max}$ la puissance maximale que peut développer le générateur électrique *i* et $\delta_i(t)$ le coefficient d'activation du générateur électrique *i* qui vaut 1 lorsque ledit générateur électrique est allumé et 0 lorsque ledit générateur électrique est éteint :

- une étape de détermination de la puissance optimale $P_i^{opt}(t)$ à l'instant t associée à chaque générateur électrique *i* de sorte à minimiser la consommation de carburant par unité d'énergie électrique produite

$$sfc(t) = \frac{1}{P_{tot}(t)} \sum_{i=1}^{N} f_i(P_i(t)) \times P_i(t)$$ avec $f_i(x)$ la fonction donnant la consommation en carburant du générateur électrique *i* pour la puissance électrique *x* noté *sfc^opt*;

- une étape de détermination de la consommation de carburant par unité d'énergie électrique produite

$$sfc(t) = \frac{1}{P_{tot}(t)} \sum_{i=1}^{N} f_i(P_i(t)) \times P_i(t)$$ notée *sfc^eq* et associée à une répartition équitable de la puissance électrique fournie par chaque générateur, ladite répartition étant telle que $\forall i \in [1, N]$ ; $P_i(t) \leq r_i P_i^{max}$ avec $r_i$ la fraction de la puissance maximale telle que $\forall i$ ; $r_i \in ]0,1]$ ;

- une étape de détermination de la puissance $P_i(t)$ associé à chaque générateur en fonction de la valeur de *sfc^eq* et *sfc^opt*.

Pour rappel, on entend par répartition équitable une répartition telle que pour tout générateur activé i,j la relation $\frac{P_i(t)}{P_i^{max}} = \frac{P_j(t)}{P_j^{max}}$ est vérifiée tout en respectant $P_{Tot}(t) = \sum_{i=1}^{N} P_i(t)\delta_i(t)$.

Le procédé selon ce premier aspect de l'invention peut présenter une ou plusieurs caractéristiques complémentaires parmi les suivantes, considérées individuellement ou selon toutes les combinaisons techniquement possibles.

Dans un mode de réalisation, la fraction de puissance maximale d'un générateur est choisie de sorte que $\min(f_i) = f_i(r_i P_i^{max})$ où $f_i(x)$ la fonction donnant la consommation en carburant par unité d'énergie électrique produite du générateur électrique i pour la puissance électrique x.

Dans un mode de réalisation, chaque générateur *i* est associé à une puissance minimale $P_i^{min}$.

Dans un mode de réalisation, chaque générateur électrique *i* est associé à une température $T_i(t)$, la vairation de cette température à l'instant *t* étant donnée par $\frac{dT_i(t)}{dt} = g_i\big(P_i(t), T_i(t)\big)$ où $g_i(x,y)$ est une fonction qui donne la variation de température du générateur i en fonction de la puissance *x* fournie par ledit générateur i et de la température y dudit générateur, ladite température étant prise en compte lors l'étape de détermination de la puissance $P_i(t)$ associé à chaque générateur.

Dans un mode de réalisation, l'étape de détermination de la puissance $P_i(t)$ associée à chaque générateur comprend :

- une sous-étape de détermination du le rapport $\frac{sfc^{eq}}{sfc^{opt}}$ ; et

- lorsque le rapport $\frac{sfc^{eq}}{sfc^{opt}}$ est supérieur à un seuil prédéfini, une sous-étape de détermination de la puissance associé à chaque générateur $P_i(t)$ conforme à la répartition équitable de la puissance fournie,

- sinon, une sous-étape de détermination de la puissance associée à chaque générateur $P_i(t)$ conforme la répartition optimale de puissance fournie.

Un deuxième aspect de l'invention concerne un procédé de pilotage de N générateurs électriques comprenant une première étape de mise en œuvre d'un procédé de détermination des paramètres de pilotage de N générateurs électriques selon le premier aspect de l'invention et une deuxième étape d'envoie des paramètres ainsi déterminés auxdits N générateurs électriques.

Ainsi, il est possible de bénéficier des avantages du procédé selon le premier aspect de l'invention dans le pilotage de N générateurs électriques.

Un troisième aspect de l'invention concerne un procédé de pilotage de N générateurs électriques comprenant une phase d'initialisation lors de laquelle le procédé selon le premier aspect de l'invention est mis en œuvre une pluralité de fois, chaque mise en œuvre étant effectué avec des valeurs de puissance demandée $P_{tot}(t)$ et de puissance de réserve $P_{reserve}(t)$ différentes de sorte à obtenir une table de correspondance et une deuxième phase de pilotage lors de laquelle des paramètres de pilotage sont envoyés auxdits N générateurs électriques, lesdits paramètres de pilotage étant déterminés à l'aide de la table de correspondance.

Ainsi, il est possible de bénéficier des avantages du procédé selon le premier aspect de l'invention dans le pilotage de N générateurs électriques. De plus, l'utilisation d'une table de correspondance permet de disposer rapidement des consignes adaptées, les calculs ayant été faits par avance et stockés dans ladite table.

Un quatrième aspect de l'invention concerne un système de pilotage comprenant des moyens de mettre en œuvre les étapes du procédé selon le premier, deuxième ou troisième aspect de l'invention.

Un cinquième aspect de l'invention concerne un programme d'ordinateur comprenant des instructions qui, lorsque le programme est exécuté par un ordinateur, conduisent celui-ci à mettre en œuvre les étapes du procédé selon le premier, deuxième, troisième aspect de l'invention.

Un sixième aspect de l'invention concerne un support de données lisible par ordinateur, sur lequel est enregistré le programme d'ordinateur selon le cinquième aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre une représentation schématique.
- La figure 2 montre un logigramme d'un procédé non revendiqué.
- La figure 3 montre une courbe représentant la consommation de carburant par unité d'énergie électrique produite d'un générateur électrique en fonction de la puissance fournie par ledit générateur.
- La figure 4 montre une courbe représentant la consommation de carburant par unité d'énergie électrique produite pour N générateurs électriques en fonction de la puissance fournie par lesdits N générateurs.
- La figure 5 montre l'évolution de la température d'un générateur au cours du temps pour une puissance produite donnée.
- La figure 6 montre un logigramme d'un mode de réalisation d'un procédé selon le premier aspect de l'invention.
- La figure 7 montre, pour la partie supérieure la puissance fournie par chaque générateur électrique i en fonction de la puissance demandée, pour la partie inférieure la valeur de consommation de carburant par unité d'énergie électrique produite en fonction de la puissance demandée.
- La figure 8 montre une courbe représentant la consommation de carburant par unité d'énergie électrique produite d'un générateur électrique en fonction de la puissance fournie par ledit générateur.
- La figure 9 montre, pour la partie supérieure la puissance fournie par chaque générateur électrique i en fonction de la puissance demandée, pour la partie inférieure la valeur de consommation de carburant par unité d'énergie électrique produite en fonction de la puissance demandée.
- La figure 10 montre un logigramme d'un mode de réalisation d'un procédé selon le deuxième aspect de l'invention.
- La figure 11 montre un logigramme d'un mode de réalisation d'un procédé selon le troisième aspect de l'invention.
- La figure 12 montre les consignes de pilotage pour trois générateurs obtenues avec un procédé de pilotage selon l'état de l'art.
- La figure 13 montre les consignes de pilotage pour trois générateurs obtenues avec un procédé de pilotage selon l'invention.
- La figure 14 montre la consommation en carburant pour une répartition équitable de la puissance (courbe en pointillé) et pour une répartition optimale de la puissance (courbe trait plein).

## DESCRIPTION DETAILLEE D'AU MOINS UN MODE DE REALISATION DE L'INVENTION

Sauf précision contraire, un même élément apparaissant sur des figures différentes présente une référence unique.

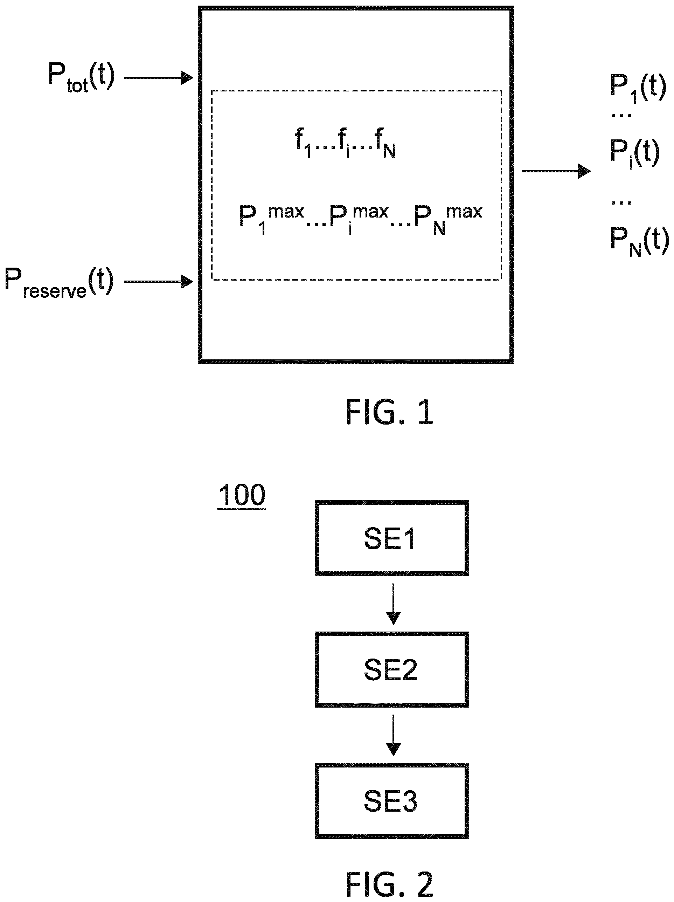

Un exemple non revendiqué illustré à la figure 1 et à la figure 2 concerne un procédé 100 de détermination des paramètres de pilotage de N générateurs électriques à un instant t. Un générateur électrique peut être un groupe électrogène, une pile à combustible ou, plus généralement, toute source d'électricité qui consomme un carburant afin de produire de l'énergie électrique. Le procédé 100 selon un premier mode de réalisation peut être mis en œuvre par un moyen de calcul, par exemple un processeur, une carte ASIC ou bien encore un FPGA, associé à une mémoire. La mémoire peut contenir les instructions et les variables nécessaires à l'exécution du procédé par le moyen de calcul. Les paramètres nécessaires à l'exécution du procédé peuvent être saisis par un opérateur et/ou obtenus de manière automatique (à l'aide de capteurs, etc.)

Le procédé 100 est fonction de plusieurs paramètres. Le premier de ces paramètres est la puissance demandée $P_{tot}(t)$ à un instant t aux N générateurs électriques. Cette dernière est donnée par la formule $P_{tot}(t) = \sum_{i=1}^{N} P_i(t)$ avec $P_i(t)$ la puissance électrique fournie par le générateur électrique i à l'instant t. Autrement dit, la somme des puissances fournies par chaque générateur électrique i doit être égale à la puissance demandée. Le second de ces paramètres est la puissance de réserve $P_{reserve}(t) \leq \sum_{i=1}^{N}(P_i^{max} - P_i(t)) \times \delta_i(t)$ avec $P_i^{max}$ la puissance maximale que peut développer le générateur électrique i (ce qui sous-entend que $P_i(t) \leq P_i^{max}$) et $\delta_i$ le coefficient d'activation du générateur électrique i qui vaut 1 lorsque ledit générateur électrique est allumé et 0 lorsque ledit générateur électrique est éteint (et donc le nombre de générateurs actifs N'(t) peut être obtenu par la formule suivante N'(t)= $\sum_{i=1}^{N} \delta_i(t)$). Cette puissance de réserve traduit le fait qu'il est plus facile de requérir de la puissance d'un générateur actif que d'activer un nouveau générateur. Il est donc nécessaire de disposer à chaque instant t, à partir des générateurs actifs, d'une puissance de réserve. C'est par exemple le cas des navires pour lesquels le rôle de générateur électrique est tenu par des groupes électrogènes dont l'activation n'est pas instantanée et qui doivent pourtant disposer d'une puissance électrique de réserve pour des raisons de sécurité.

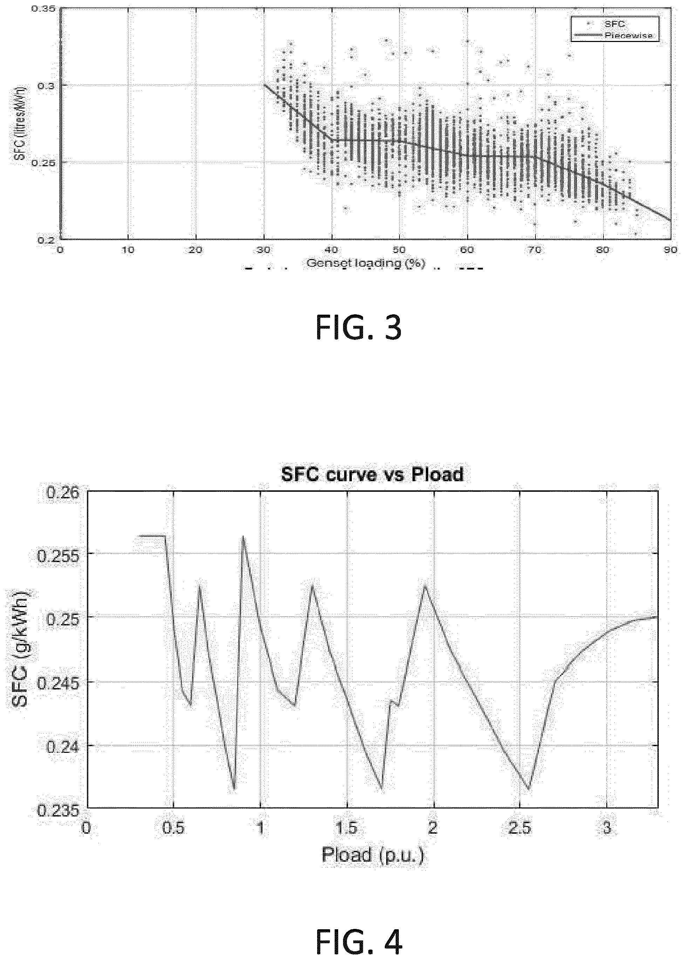

En plus des paramètres énoncés ci-dessus, le procédé prend en compte la consommation de carburant par unité d'énergie électrique produite sfc(t) = $\frac{1}{P_{tot}(t)} \sum_{i=1}^{N} f_i(P_i(t)) \times P_i(t)$ avec $f_i(x)$ la fonction donnant la consommation en carburant par unité d'énergie électrique produite du générateur électrique i pour la puissance électrique x. Un exemple de fonction $f_i(x)$ donnant la consommation en carburant par unité d'énergie électrique produite du générateur électrique i est illustrée en figure 3 dans le cas d'un groupe électrogène. Les points correspondent aux mesures expérimentales et la courbe correspond à une courbe déterminée à partir de ces mesures. Un exemple de la valeur de sfc dans le cas de N générateurs électriques en fonction de la puissance demandée $P_{tot}(t)$ est illustrée en figure 4 dans le cas de groupes électrogènes. Afin de tenir compte de cette consommation de carburant par unité d'énergie électrique produite sfc(t), le procédé selon un premier aspect de l'invention, à partir de la puissance demandée $P_{tot}(t)$ et de la puissance de réserve $P_{reserve}(t)$, met en œuvre une étape de détermination de la puissance optimale $P_i^{opt}(t)$ à l'instant t associé à chaque générateur électrique i de sorte à minimiser la consommation de carburant par unité d'énergie électrique produite sfc(t).

Ainsi, à l'issue du procédé selon cet exemple, chaque générateur électrique i peut être associé à une puissance optimale $P_i^{opt}(t)$. La pluralité de puissances optimales $P_i^{opt}(t)$ ainsi obtenue respecte les trois conditions suivantes :

$$P_{tot}(t) = \sum_{i=1}^{N} P_i^{opt}(t) \; ;$$

$$P_{reserve}(t) \leq \sum_{i=1}^{N}(P_i^{max} - P_i^{opt}(t)) \times \delta_i(t) \; ;$$

$$\min\left(\frac{1}{P_{Tot}(t)} \sum_{i=1}^{N} f_i(P_i(t)) \times P_i(t)\right) = \frac{1}{P_{Tot}(t)} \sum_{i=1}^{N} f_i(P_i^{opt}(t)) \times P_i^{opt}(t).$$

Dans un exemple, cette étape de détermination comprend une sous-étape SE1 de détermination d'un profil d'activation δ(t) permettant de respecter la relation $P_{reserve}(t) \leq \sum_{i=1}^{N}(P_{max}^i - P_i(t)) \times \delta_i(t)$ et correspondant au nombre de générateurs électriques activés le plus faible, ladite détermination étant effectuée en supposant une répartition équitable de la puissance électrique produite $P_i^{eq}(t)$ par chaque générateur électrique i. On entend par répartition équitable une répartition telle que pour tout générateur activé i, j la relation $\frac{P_i(t)}{P_i^{max}} = \frac{P_j(t)}{P_j^{max}}$ est vérifiée tout en respectant $P_{Tot}(t) = \sum_{i=1}^{N} P_i(t)\delta_i(t).$ Dans la suite, on notera δ(t) le profil d'activation à un instant t. Ce profil d'activation δ(t) correspond à un ensemble de configurations, chaque configuration étant associée à un N-uplet ($\delta_1(t)$ ... $\delta_i(t)$ ... $\delta_N(t)$) de coefficients d'activation $\delta_i(t)$ où N est le nombre de générateurs électriques considérés.

Cette sous-étape SE1 de détermination du profil d'activation δ(t) peut être illustrée au travers d'un exemple dans lequel trois générateurs électriques identiques G1, G2, G3 pouvant délivrer une puissance maximale électrique de 1 (autrement dit $P_i^{max} = P^{max} = 1$) sont supposés. Dans cet exemple, il est également supposé que la puissance demandée est égale à 1,5 (autrement dit $P_{tot}(t) = 1.5$) et que la puissance de réserve est égale à 0,3 (autrement dit $P_{reserve}(t) = 0.3$). Il apparait évident que l'activation d'un seul générateur électrique n'est pas suffisante puisque la puissance demandée $P_{tot}(t)$ est supérieure à la puissance maximale $P_i^{max}$ que peut fournir chaque générateur i. Un profil d'activation δ(t) impliquant deux générateurs activés et correspondant aux triplets {(1,1,0), (0,1,1), (1,0,1)} (c'est-à-dire à trois configurations différentes) peut en revanche être considéré. Afin de déterminer si ces trois configurations peuvent être retenues, il est supposé une répartition équitable de la puissance électrique produite $P_i^{eq}(t)$ par chaque générateur électrique i. On entend par répartition équitable une répartition telle que pour tout générateur activé i, j la relation $\frac{P_i(t)}{P_i^{max}} = \frac{P_j(t)}{P_j^{max}}$ est vérifiée tout en respectant $P_{Tot}(t) = \sum_{i=1}^{N} P_i(t)\delta_i(t).$ Autrement dit, une répartition équitable au sens de l'invention ne signifie pas que chaque générateur G1, G2, G3 fournit la même puissance électrique $P_i(t)$, cette situation ne correspondant qu'au cas particulier dans lequel tous les générateurs G1, G2, G3 ont une puissance maximale $P_i^{max}$ identique. Il est important de noter que la répartition équitable de la puissance est différente de la répartition optimale de la puissance. Les trois générateurs électriques étant ici équivalents, le calcul du profil d'activation peut être limité à une seule de ces configurations. En revanche, si chaque générateur était différent des autres, il serait alors nécessaire d'effectuer les calculs qui suivent pour chacune des configurations afin d'étudier chacune des configurations indépendamment. Pour deux générateurs actifs, la puissance équitable $P_i^{eq}(t)$ est égale à 0.75 soit K = 0.75.

Dans cette configuration, la puissance encore disponible est donnée par $\sum_{i=1}^{N}(P_{max}^i - P_i^{eq}(t)) \times \delta_i(t) =$

$(1 - 0.75) \times 1 + (1 - 0.75) \times 1 + (1 - 0.75) \times 0 = 0.5$. Or $P_{reserve}(t) = 0.3 \leq 0.5$ : la condition portant sur la puissance de réserve $P_{reserve}(t)$ est donc bien respectée. Sachant que le profil d'activation $\delta(t)$ doit être choisi de sorte à obtenir le nombre de générateurs électriques actifs le plus faible et qu'un nombre de deux générateurs électriques actifs est nécessaire et suffisant pour remplir les critères de puissance demandée $P_{tot}(t)$ et de puissance de réserve $P_{reserve}(t)$, le nombre de générateurs actifs à considérer N'(t) est égal à 2. A l'issue de cette sous-étape SE1, le profil d'activation est donc déterminé et égal à $\delta(t)$ = {(1,1,0), (0,1,1), (1,0,1)}. Autrement dit, il y a toujours deux générateurs électriques actifs et un générateur électrique inactif. Il convient maintenant de déterminer la puissance optimale $P_i^{opt}(t)$ associé à chaque générateur électrique i.

Dans un exemple, si une configuration du profil d'activation $\delta(t)$ correspond au profil d'activation actuel des générateurs, ladite configuration est choisie comme étant le profil d'activation. Dans l'exemple ci-dessus, le profil d'activation déterminé est $\delta(t)$ = {(1,1,0), (0,1,1), (1,0,1)}. Si les générateurs actifs au moment de l'élaboration de la consigne correspond au profil d'activation (1,1,0), alors le profil d'activation retenu sera (1,1,0), les configurations (0,1,1) et (1,0,1) étant éliminées. Cela permet d'éviter d'activer inutilement un nouveau générateur (en en désactivant inutilement un autre). L'étape de détermination comprend ensuite une sous-étape SE2 de calcul, pour une pluralité de répartitions de la puissance fournie $P_i(t)$ par chaque générateur électrique i compatible avec le profil d'activation $\delta(t)$ déterminé et

respectant l'égalité $P_{tot}(t) = \sum_{i=1}^{N} P_i(t),$ de la consommation de carburant par unité d'énergie électrique produite

$sfc(t) = \frac{1}{P_{tot}(t)}[\sum_{i=1}^{N} f_i(P_i(t)) \times P_i(t)].$ Autrement dit, on fait varier, pour chaque générateur actif i, la puissance fournie $P_i(t)$, de sorte à obtenir une pluralité de répartition de puissance fournie $P_i(t)$ entre les générateurs, chaque répartition étant telle que $P_{tot}(t) = \sum_{i=1}^{N} P_i(t).$ Puis, pour chacune de ces répartitions, on calcule la valeur de la consommation de carburant par unité d'énergie électrique produite sfc(t).

Par exemple, dans le cas des trois générateurs identiques évoqué plus haut et pour la configuration (1,1,0) du profil d'activation $\delta(t)$, la puissance fournie $P_1(t)$ du premier générateur est variée de 0.5 à 1 tandis que la puissance fournie $P_2(t)$ est variée de 1 à 0.5 (les bornes choisies permettent de s'assurer que, pour chaque triplet de puissance, $P_{tot}(t)$ = 1.5) tandis que la puissance fournie $P_3(t)$ par le troisième générateur est maintenue à zéro (ce dernier n'étant pas actif). Ainsi, une pluralité de triplets $(P_1(t),P_2(t),0)$ est constituée. Il donc possible, à partir de ces triplets, de calculer, pour chaque triplet, une valeur de consommation de carburant par unité d'énergie électrique produite donnée par

$sfc(t) = \frac{1}{P_{tot}(t)} \sum_{i=1}^{N} f_i(P_i(t)) \times P_i(t).$ Dans le cas présent, les générateurs étant identiques, il n'est pas nécessaire d'effectuer à nouveau le calcul pour les configurations (0,1,1) et (1,0,1) du profil d'activation $\delta(t)$. Un tel calcul serait en revanche nécessaire dans le cas de générateurs électriques différents. On obtient, à l'issue de cette sous-étape SE2, une pluralité de valeurs de la consommation de carburant par unité d'énergie électrique produite sfc(t), chacune de ces valeurs étant associée à une répartition de puissance pouvant être mise sous la forme d'un triplet de puissances $(P_1(t),P_2(t),P_3(t))$.

L'étape de détermination comprend enfin une sous-étape SE3 de détermination de la puissance électrique $P_i(t)$ fournie par chaque générateur i, dite puissance optimale $P_i^{opt}(t)$ telle que:

$$\min\left(\frac{1}{P_{Tot}(t)}\sum_{i=1}^{N} f_i(P_i(t)) \times P_i(t)\right) = \frac{1}{P_{Tot}(t)}\sum_{i=1}^{N} f_i(P_i^{opt}(t)) \times P_i^{opt}(t)$$

Autrement dit, on cherche la ou les répartitions de puissances qui permettent de minimiser la consommation de carburant par unité d'énergie électrique produite sfc(t).

Il est possible d'illustrer cette sous-étape SE3 en se replaçant dans l'exemple précédemment exposé. Dans cet exemple, à l'issue de la sous-étape SE2 de calcul, une pluralité de valeurs de la consommation de carburant par unité d'énergie électrique produite sfc(t) est obtenue, chacune de ces valeurs étant associée à une répartition de puissance pouvant être mise sous la forme d'un triplet de puissances $(P_1(t),P_2(t),P_3(t))$. Il est donc possible de déterminer la valeur la plus faible de la consommation de carburant par unité d'énergie électrique produite parmi la pluralité de valeurs. Cette valeur correspond à $\min \left( \frac{1}{P_{Tot}(t)} \sum_{i=1}^{N} f_i(P_i(t)) \times P_i(t) \right)$ et peut être associée à une ou plusieurs répartitions de puissances (ou à un ou plusieurs triplets de puissances). Autrement dit, les puissances formant le ou les triplets de puissances associés à cette valeur la plus faible correspondent aux puissances optimales $P_i^{opt}(t)$. Dans l'exemple choisi et en considérant la configuration $(1,1,0)$, si l'on suppose que la fonction $f_i(x)$ est monotone décroissante, deux triplets $\left(P_1^{opt}, P_2^{opt}, P_3^{opt}\right)$ minise la consommation de carburant par unité d'énergie électrique produite : $(1,0.5,0)$ et $(0.5,1,0)$. Bien sûr, le résultat peut être repris pour les deux autres configurations $((0,1,1)$ et $(1,0,1))$ du profil d'activation $\delta(t)$. Ainsi, l'exemple de procédé non revendiqué a permis de déterminer la puissance optimale $P_i^{opt}$ de chaque générateur électrique i permettant de respecter la demande en puissance $P_{tot}(t)$, la réserve de puissance $P_{reserve}(t)$ et de minimiser la consommation de carburant par unité d'énergie électrique produite sfc. Plus particulièrement, en prenant en compte toutes les configurations possibles $(\delta_1(t) \dots \delta_i(t) \dots \delta_N(t))$ du profil d'activation $\delta(t)$, la puissance $\left(P_1^{opt}, P_2^{opt}, P_3^{opt}\right)$ est égale à $(1,0.5,0)$, $(0.5,1,0)$, $(0,0.5,1)$, $(0,1,0.5)$, $(1,0,1.5)$ ou $(0.5,0,1)$.

Dans un exemple non revendiqué, chaque générateur est associé à une puissance minimale $P_i^{min}$. Autrement dit, la puissance fournie $P_i(t)$ par chaque générateur est comprise entre $P_i^{min}$ et $P_i^{max}$. Ce mode de réalisation est particulièrement adapté aux cas où un niveau de production minimum est requis par exemple lors de l'utilisation de groupes électrogènes. Dans ce cas-là, lorsque la puissance fournie $P_i(t)$ par chaque générateur actif est variée de sorte à obtenir une pluralité de valeurs, cette variation est effectuée en respectant la puissance minimale $P_i^{max}$.

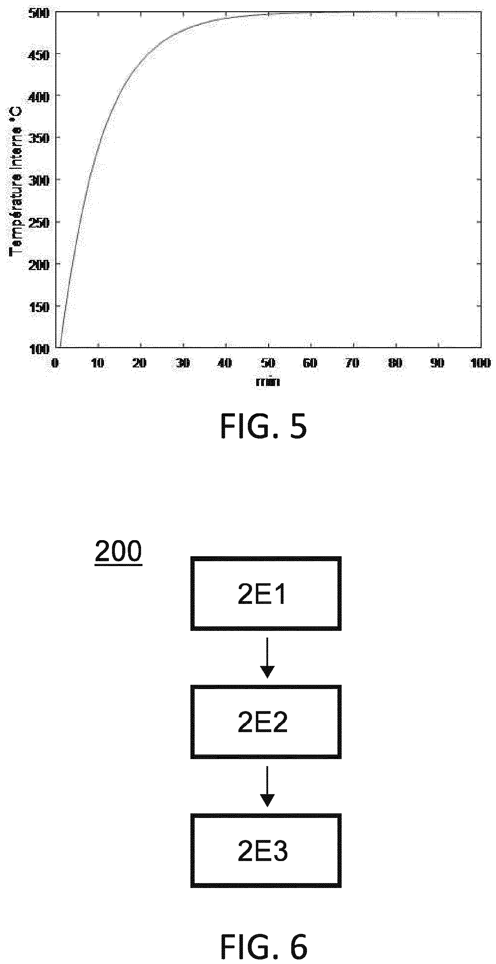

Dans un exemple non revendiqué, chaque générateur électrique i est associé à une température $T_i(t)$. De plus la variation de cette température à l'instant t est donnée par $\frac{dT_i(t)}{dt} = g_i\left(P_i(t), T_i(t)\right)$ où $g_i(x,y)$ est une fonction qui donne la variation de température du générateur i en fonction de la puissance x fournie par ledit générateur i et de la température y dudit générateur. En effet, la conversion d'un carburant en énergie électrique dégage en général de la chaleur qui conduit à un échauffement du générateur lui-même. Il est alors important de tenir compte de cet échauffement dans la détermination de la puissance optimale de sorte à ne pas endommager le générateur en question. Un exemple de tracé de la température en fonction du temps t pour une puissance donnée $x_i$ est illustré en figure 5. Dans un mode de réalisation, chaque générateur i est également associé à une température maximale $T_i^{max}$.

Dans un exemple non revendiqué, lors de la sous-étape SE3 de détermination de la répartition de la puissance électrique $P_i(t)$ fournie par chaque générateur, lorsque plusieurs répartitions optimales sont déterminées, la répartition ou les répartitions retenues sont celles qui attribuent à chaque générateur électrique i une puissance électrique $P_i(t)$ inversement proportionnelles à la température $T_i(t)$ dudit générateur électrique i lorsque de telles répartitions sont possibles. Par exemple si deux répartitions de la puissance électrique $(P_1(t), P_2(t), P_3(t)) = (0.8,0.6,0)$ ou $(0.6,0.8,0)$ existent, et que la température du premier générateur est supérieure à la température du deuxième générateur (i.e. $T_1(t) > T_2(t)$), alors la deuxième répartition $(0.6,0.8,0)$ sera choisie.

Dans un exemple non revendiqué, lors de la sous-étape SE3 de détermination de la répartition de la puissance électrique $P_i(t)$ fournie par chaque générateur, lorsque plusieurs répartitions optimales sont déterminées, la répartition ou les répartitions retenues sont celles qui permettent de minimiser la température maximale atteinte par chaque générateur électrique i pour un horizon donné t + H où H est la durée séparant l'instant t de l'horizon considéré. Autrement dit, la ou les répartitions retenues sont celles dont les puissances fournies $P_i(t)$ attribuées à chaque générateur i sont conformes à la relation suivante $P_i(t) \in P_i^*$: Min (max $(T_i(P_i(t + H))))$ où H est l'horizon choisi et $P_i^*$ est la puissance optimale pour le générateur i.

Comme cela vient d'être détaillé, un procédé 100 selon un exemple non revendiqué permet d'obtenir une répartition optimale de la puissance afin de minimiser la consommation en carburant. Cependant, cette optimisation a un coût : l'adoption de puissances fournies $P_i(t)$ très disparates entre générateurs. Si de telles disparités ne présentent pas de problème lorsqu'elles se produisent sur de courtes périodes, elles peuvent en revanche, si elles sont maintenues trop longtemps, engendrer des problèmes d'appels de puissance trop importants pour certains groupes G1,G2,G3. Un moyen de s'affranchir de ce désavantage est de n'adopter une telle répartition que lorsque cette dernière présente un avantage substantiel relativement à une répartition de puissance équitable. Pour rappel, on entend par répartition équitable une répartition de la puissance $P_i(t)$ entre générateurs activés telle que pour tout générateur activé $i,j$ l'égalité suivante est vérifiée $\frac{P_i(t)}{P_i^{max}} = \frac{P_j(t)}{P_j^{max}}$.

Pour cela un premier aspect de l'invention illustré à la figure 6 concerne un procédé 200 de détermination des paramètres de pilotage de N générateurs électriques à un instant t. Le procédé est fonction d'une puissance demandée

$$P_{tot}(t) = \sum_{i=1}^{N} P_i(t)$$ à un instant t avec $P_i(t)$ la puissance électrique fournie par le générateur électrique $i$ à l'instant t et une puissance de réserve $$P_{reserve}(t) \leq \sum_{i=1}^{N}(P_i^{max} - P_i(t)) \times \delta_i(t)$$ à un instant t avec $P_i^{max}$ la puissance maximale que peut développer le générateur électrique i et $\delta_i(t)$ le coefficient d'activation du générateur électrique i qui vaut 1 lorsque ledit générateur électrique est allumé et 0 lorsque ledit générateur électrique est éteint. Le schéma de la figure 1 s'applique donc également à un procédé selon un deuxième aspect de l'invention.

Le procédé 200 selon un premier aspect de l'invention comprend une étape 2E1 de détermination de la puissance optimale $P_i^{opt}(t)$ à l'instant t associée à chaque générateur électrique i de sorte à minimiser la consommation de carburant par unité d'énergie électrique produite $$sfc(t) = \frac{1}{P_{tot}(t)} \sum_{i=1}^{N} f_i(P_i(t)) \times P_i(t)$$ avec $f_i(x)$ la fonction

donnant la consommation en carburant du générateur électrique $i$ pour la puissance électrique $x$ noté $sfc^{opt}$. Comme expliqué auparavant et détaillé dans la description d'un procédé selon un exemple non revendiqué, l'optimisation des puissances conduit généralement à une répartition inéquitable des puissances $P_i(t)$.

Le procédé 200 comprend ensuite une étape 2E2 de détermination de la consommation de carburant par unité d'énergie électrique produite $$sfc(t) = \frac{1}{P_{tot}(t)} \sum_{i=1}^{N} f_i(P_i(t)) \times P_i(t)$$ associée à une répartition équitable de la puissance électrique fournie par chaque générateur et notée $sfc^{eq}$, ladite répartition étant telle que $$P_i(t) \leq r P_i^{max}$$

avec r $\in ]0,1]$. Dans la suite, la fraction $r_i$ sera appelé la fraction de puissance fournie. La condition $$P_i(t) \leq r_i P_i^{max}$$

avec $r_i \in ]0,1]$ permet de s'assurer que la puissance fournie par chaque générateur n'est qu'une fraction de la puissance maximale dudit générateur, par exemple 85% soit $\forall i$ ; $r_i$ = 0.85. La fraction $r_i$ de puissance fournie peut également être vue comme un seuil de puissance au-delà duquel l'activation d'un nouveau générateur est nécessaire. Bien entendu, la répartition équitable (tout comme la répartition optimale évoquée plus haut) vérifie les égalités

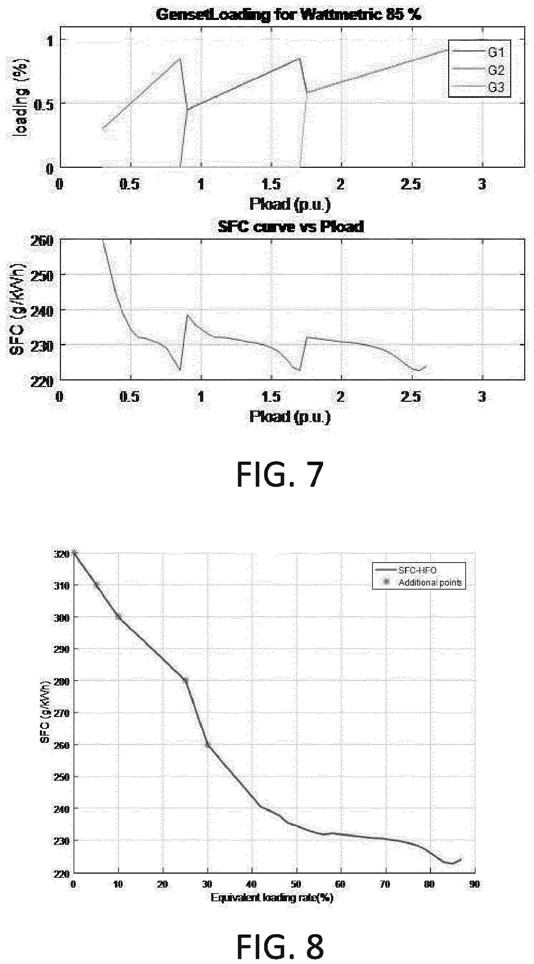

$$P_{tot}(t) = \sum_{i=1}^{N} P_i(t)$$ et réserve $$P_{reserve}(t) \leq \sum_{i=1}^{N}(P_i^{max} - P_i(t)) \times \delta_i(t).$$ A l'issue de cette étape, la consommation de carburant $sfc^{eq}$ correspondant à une répartition équitable de la puissance entre différent générateurs permettant de répondre à la puissance demandée est connue. La figure 7 illustre une répartition équitable entre trois générateur G1,G2,G3 dans le cas d'une fraction de puissance r = 0.85 et d'une puissance maximale $P^{max}$ identiques pour chaque générateur en fonction de la puissance demandée (courbe du haut). Elle montre également la consommation en carburant par unité d'énergie électrique produite correspondante (courbe du bas).

Dans un mode de réalisation, la fraction de puissance maximale $r_i$ d'un générateur est choisie de sorte que

$$\min(f_i) = f_i(r_i P_i^{max})$$ où $f_i(x)$ la fonction donnant la consommation en carburant par unité d'énergie électrique produite du générateur électrique i pour la puissance électrique x. Autrement dit, la puissance fournie par un générateur

lorsque $$P_i(t) = r_i P_i^{max}$$ minimise la consommation en carburant dudit générateur. Dans un mode de réalisation, le procédé comprend, pour chaque générateur, une étape de détermination de la consommation en carburant par unité d'énergie électrique produite en fonction de la puissance de sorte à obtenir la fonction $f_i(x)$ pour chaque générateur. De manière alternative, cette consommation en carburant peut être fournie par le constructeur ou le distributeur dudit générateur. Un exemple de consommation de carburant par unité d'énergie électrique produite en fonction de la puissance de sortie est représenté à la figure 8. Dans cet exemple, min $(f_i(x))$ est obtenue avec r = 0.85 et cette valeur de la fraction de puissance maximale sera donc retenue pour la mise en œuvre d'un procédé 200 selon un deuxième aspect de l'invention. On notera également que la fonction $f_i(x)$ peut varier en fonction de chaque générateur et que donc cette dernière ainsi que la valeur de la fraction $r_i$ de puissance maximale devront être déterminées pour chaque générateur.

Le procédé comprend ensuite une étape 2E3 de détermination de la puissance $P_i(t)$ associée à chaque générateur en fonction de la valeur de $sfc^{eq}$ et $sfc^{opt}$. Autrement dit, la répartition de la puissance $P_i(t)$ parmi les $N$ générateurs va se faire en fonction de la consommation en carburant associée à une répartition équitable $sfc^{eq}$ et de la consommation en carburant associée à une répartition optimale $sfc^{opt}$.

Dans un mode de réalisation, lors de l'étape 2E3 de détermination de la puissance $P_i(t)$ associée à chaque générateur comprend :

- une sous-étape 2E31 de détermination du le rapport $\dfrac{sfc^{eq}}{sfc^{opt}}$ ; et

- lorsque le rapport $\dfrac{sfc^{eq}}{sfc^{opt}}$ est supérieur à un seuil prédéfini, une sous-étape 2E32 de détermination de la puissance associée à chaque générateur $P_i(t)$ conforme à la répartition équitable de la puissance fournie,

- sinon, une sous-étape 2E33 de détermination de la puissance associée à chaque générateur $P_i(t)$ conforme la répartition optimale de puissance fournie.

Autrement dit, la répartition optimale ne sera choisie que si elle présente un avantage substantiel comparativement à la répartition équitable. Dans un mode de réalisation, le seuil prédéfini est égale à 0.99. Autrement dit, lorsque la répartition optimale est plus performante de 1% par rapport à la répartition de puissance équitable, la répartition optimale est la répartition retenue.

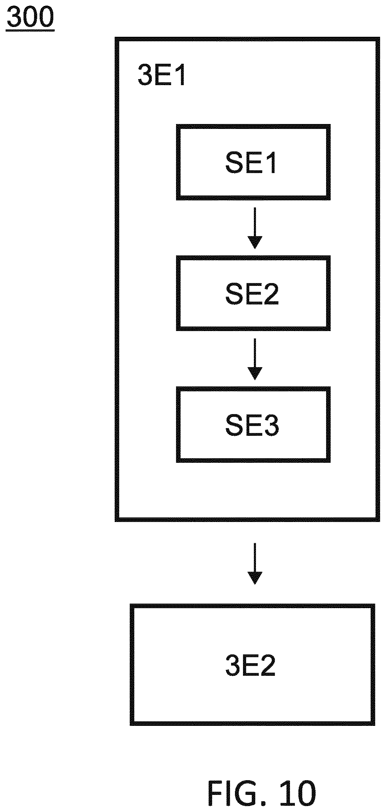

Un deuxième aspect de l'invention illustré à figure 10 concerne un procédé 300 de pilotage de N générateurs électriques comprenant une première étape 3E1 de mise en œuvre d'un procédé 100,200 de détermination des paramètres de pilotage de N générateurs électriques selon un premier aspect de l'invention et une étape 3E2 d'envoie des paramètres ainsi déterminés auxdits N générateurs électriques.

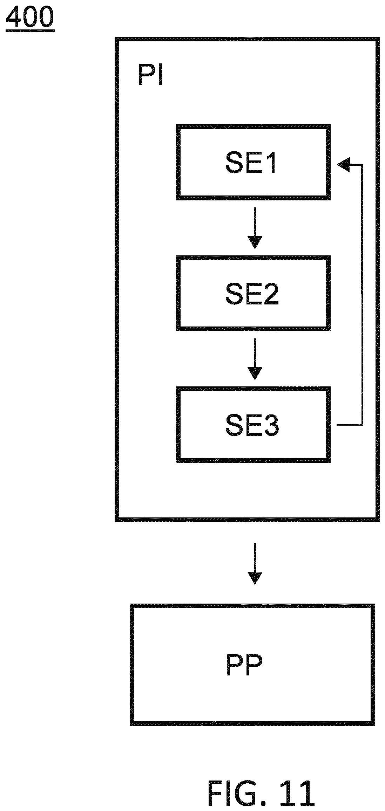

Un troisième aspect de l'invention illustré à la figure 11 concerne un procédé 400 de pilotage de N générateurs électriques comprenant une première phase PI d'initialisation lors de laquelle le procédé 100,200 selon un premier aspect de l'invention est mis en œuvre une pluralité de fois, chaque mise en œuvre étant effectuée avec des valeurs de puissance demandée $P_{tot}(t)$ et de puissance de réserve $P_{reserve}(t)$ différentes de sorte à obtenir une table de correspondance (look up table en anglais).

Ainsi, lorsque la phase d'initialisation est effectuée à l'aide d'un procédé selon un exemple non revendiqué, la table de correspondance permet de fournir, pour une valeur de puissance demandée $P_{tot}(t)$ et une puissance de réserve $P_{reserve}(t)$, la ou les répartitions optimales de puissance $(P_1(t) ... P_i(t) ... P_N(t))$. Dans un exemple non revendiqué, lorsque le procédé 100 lors de la phase PI d'initialisation prend en compte la température $T_i(t)$ de chaque générateur électrique i, alors ledit procédé 100 selon un exemple non revendiqué, est également mis en œuvre pour différentes températures des différents générateurs électriques. Ainsi, la table de correspondance permet de fournir, pour une valeur de puissance demandée $P_{tot}(t)$, une puissance de réserve $P_{reserve}(t)$ et en fonction de la température $T_i(t)$ de chaque générateur électrique i, la ou les répartitions optimales de puissance $(P_1(t) ... P_i(t) ... P_N(t))$.

De même, lorsque la phase d'initialisation PI est effectuée à l'aide d'un procédé 200 selon un premier aspect de l'invention, la table de correspondance permet de fournir, pour une valeur de puissance demandée $P_{tot}(t)$ et une puissance de réserve $P_{reserve}(t)$, la ou les répartitions optimales et équitable de puissance $(P_1(t) ... P_i(t) ... P_N(t))$ ainsi que les paramètres de consommation $sfc^{eq}$ et $sfc^{opt}$ associés. Dans un mode de réalisation, lorsque le procédé 200 selon un deuxième aspect de l'invention mise en œuvre lors de la phase PI d'initialisation prend en compte la température $T_i(t)$ de chaque générateur électrique i, alors ledit procédé 200 selon un deuxième aspect de l'invention est également mis en œuvre pour différentes températures des différents générateurs électriques.

Le procédé comprend ensuite une deuxième phase PP de pilotage lors de laquelle des paramètres de pilotage sont envoyés auxdits N générateurs électriques, lesdits paramètres de pilotage étant déterminés à l'aide de la table de correspondance.

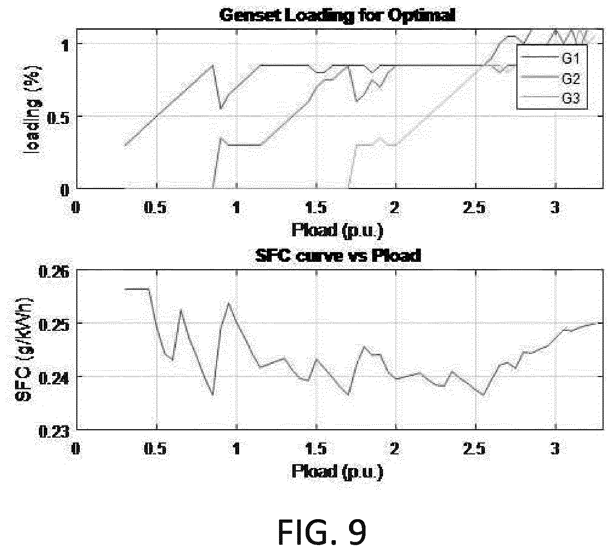

Un exemple de mise en œuvre du procédé selon un deuxième ou troisième aspect de l'invention est illustré aux figures 9, 12 et 13 dans le cas où la phase d'initialisation est effectuée avec un procédé 100 selon un exemple non revendiqué. La figure 9 illustre le pilotage de trois générateurs G1, G2, G3 identiques, chaque générateur ayant une puissance maximale $P_i^{max}$ égale à 1600 kW et la puissance de réserve $P_{reserve}$ étant choisie égale à 240 kW. Plus particulièrement, la partie supérieure de la figure 6 illustre la puissance fournie $P_i(t)$ par chaque générateur électrique i (en ordonnée) en fonction de la puissance demandée $P_{tot}(t)$. La partie inférieure de la figure 6 illustre quant à elle la valeur de la fonction sfc en fonction de la puissance demandée $P_{tot}(t)$.

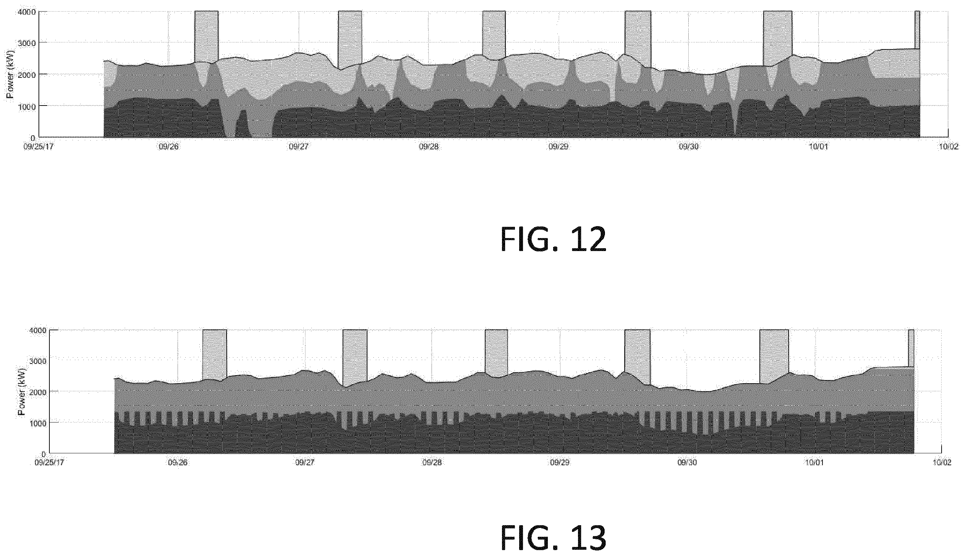

Les figure 12 et 13 illustrent, pour la figure 12 le fonctionnement de trois générateurs G1, G2, G3 pilotés à l'aide d'un procédé selon l'état de la technique, pour la figure 13 le fonctionnement de trois générateurs G1, G2, G3 pilotés à l'aide d'un procédé selon un premier 200 ou un deuxième 300 aspect de l'invention lorsque la phase d'initialisation est effectuée à l'aide d'un procédé 100 selon un exemple non revendiqué. Dans le cas du procédé selon l'état de la technique, les trois générateurs G1, G2, G3 sont régulièrement actifs en même temps afin de répondre à la demande. Dans l'exemple donné, le carburant consommé a été de 91,87 m³ et la durée de fonctionnement des groupes a été de 396 h.

Dans le cas d'un procédé selon l'invention, seul deux des trois générateurs G1, G2, G3 sont sollicités (à l'exception de la fin de la courbe du fait d'une forte puissance demandée). Autre élément important, lorsqu'un procédé de pilotage selon l'invention est mis en œuvre, les deux générateurs sollicités alternent dans la fourniture de la puissance la plus élevée de sorte à limiter l'échauffement de chacun d'eux. Cette alternance est visible sur les courbes au travers des créneaux discernables dans la variation des puissances fournies. Chaque front (montant ou descendant) d'un créneau correspond à un changement d'attribution de la puissance fournie, le générateur le plus chaud se voyant attribuer la puissance à fournir la plus faible et vice-versa. Dans l'exemple donné, le carburant consommé a été de 89.82 m³ et la durée de fonctionnement des groupes a été de 310 h. Ainsi, grâce au procédé de pilotage selon l'invention, il a été possible d'économiser 2% du carburant. De plus, il a été également possible de réduire la durée de fonctionnement des générateurs de 22%, ce qui signifie une diminution conséquente de l'usure des pièces et de la maintenance. Autrement dit, la mise en œuvre d'un procédé selon l'invention a permis d'obtenir une réduction de la consommation en carburant, de l'usure (et de la maintenance) des générateurs électriques.

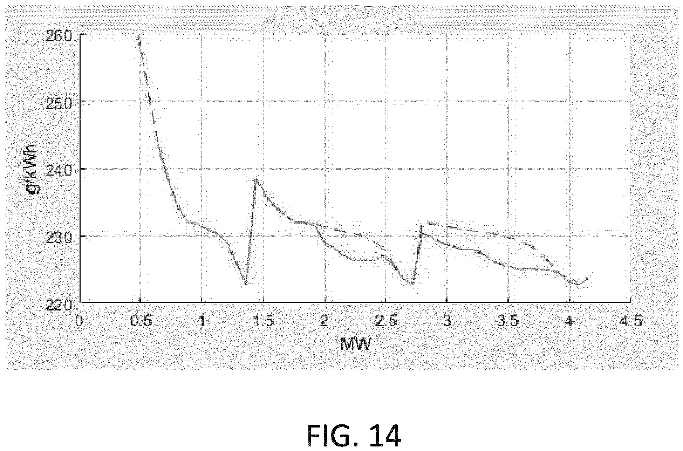

Un deuxième exemple de mise en œuvre du procédé 300,400 selon un deuxième ou troisième aspect de l'invention est illustré à la figure 14 dans le cas où la phase d'initialisation PI est effectuée avec un procédé 200 selon un premier aspect de l'invention. La figure 14 représente la consommation en carburant en fonction de la puissance totale demandée. La courbe en pointillé représente la consommation en carburant en supposant une répartition des puissances équitable et telle que $P_i(t) \leq 0.85 P_i^{max}$. La courbe trait plein représente quant à elle la consommation en carburant en supposant une répartition des puissances optimales. Sur cette figure, il est possible de différentier deux situations : une première situation dans laquelle la consommation en carburant est sensiblement la même pour une répartition optimale et une répartition équitable des puissances (les deux courbes se superposent) et une deuxième situation dans laquelle la consommation en carburant pour une répartition optimale est inférieure à la consommation en carburant pour une répartition équitable de la puissance (la courbe trait plein est en dessous de la courbe en pointillé). Dans la première situation, le procédé de pilotage va adopter une répartition de puissance équitable puisque cette dernière permet d'obtenir sensiblement la même consommation en carburant, tout en permettant une meilleure répartition de l'effort sur l'ensemble des générateurs activés. Dans la deuxième situation, le procédé de pilotage va adopter une répartition de puissance optimale puisque cette dernière permet d'obtenir une économie de carburant comparativement à une répartition équitable, au prix d'une mauvaise répartition de l'effort sur l'ensemble des générateurs activés. Comme on peut le voir sur cette courbe, le pilotage se fera dans la plupart des cas dans un régime de répartition des puissances équitables, et donc une meilleure répartition de l'effort sur l'ensemble des générateurs activés. Plus particulièrement, le pilotage va s'effectuer selon une répartition équitable de la puissance pour une puissance demandée comprise entre 0 et 1,2 p.u. puis entre 1,6 et 1,75 p.u. et enfin au-delà de 2,45 p.u., une répartition optimale étant adoptée dans les autres cas.

Parfois, lorsque le système se trouve dans la deuxième situation, il est préférable que la bascule d'une répartition de la puissance équitable à une répartition de la puissance optimale ne se fasse pas de manière automatique mais après validation d'un opérateur, par exemple pour des raisons de sécurité ou des raisons techniques. Pour cela, lorsque les paramètres de pilotage déterminés supposent une transition d'une répartition équitable à une répartition optimale, ladite transition est soumise à la validation d'un opérateur, les paramètres correspondant à une répartition équitable étant utilisés tant que la validation par l'opérateur n'est pas effectuée. Autrement dit, tant que l'opérateur ne valide pas la transition, le pilotage est effectué en supposant une répartition de la puissance équitable. Une fois la transition validée par l'opérateur, le pilotage se fait alors à l'aide d'une répartition de la puissance optimale (sauf si, entre temps, le système est à nouveau dans la première situation).

Un quatrième aspect de l'invention concerne un système de pilotage comprenant les moyens pour la mise en œuvre d'un procédé selon un premier ou un deuxième aspect de l'invention. Le système de pilotage comprend un moyen de calcul, par exemple un processeur, une carte ASIC ou bien encore un FPGA, associé à une mémoire. La mémoire peut contenir les instructions et les variables nécessaires à l'exécution du procédé par le moyen de calcul. Afin de recueillir les paramètres d'entrée tels que la puissance demandée P$_{tot}$(t) et la puissance de réserve P$_{reserve}$(t), le système de pilotage peut comprendre des moyens de saisie (par exemple un clavier associé à un écran ou bien encore un écran tactile) sur lequel un opérateur peut saisir les informations correspondantes. De manière alternative ou complémentaire, ces paramètres peuvent en tout ou partie être déterminés de manière automatique. Par exemple, dans le cas d'un navire, la puissance de réserve $P_{reserve}(t)$ est déterminée en fonction de la situation actuelle dudit navire : à quai, en cours de manœuvre, en pleine mer, etc. Les moyens de saisie permettent également à un utilisateur de renseigner le système de pilotage sur les caractéristiques de chaque générateur électrique i telles que la puissance maximale $P_i^{max}$, minimale $P_i^{min}$ ou la température maximale $T_i^{max}$ à ne pas dépasser. De plus, lorsque la température est prise en compte pour la détermination des consignes de pilotage, le système de pilotage peut comprendre des moyens de communication afin d'obtenir la température des capteurs placés au niveau de chaque générateur électrique. En effet, de manière générale, chaque générateur électrique dispose d'un capteur de température afin d'assurer un bon suivi de son fonctionnement. Le système de pilotage peut donc être configuré pour recevoir les données recueillies par lesdits capteurs. De même, le système de pilotage peut également comprendre des moyens de communication connecté aux différents générateurs électriques de sorte à communiquer à ces derniers les consignes, c'est-à-dire la puissance $P_i(t)$ que chaque générateur électrique $i$ doit fournir.

## Revendications

1. Procédé (200) de détermination des paramètres de pilotage de $N$ générateurs électriques à un instant t, ledit procédé comprenant, pour une puissance demandée $P_{tot}(t) = \sum_{i=1}^{N} P_i(t)$ à un instant t avec $P_i(t)$ la puissance électrique fournie par le générateur électrique $i$ à l'instant t et une puissance de réserve $P_{reserve}(t) \le \sum_{i=1}^{N}(P_i^{max} - P_i(t)) \times \delta_i(t)$ à un instant t avec $P_i^{max}$ la puissance maximale que peut développer le générateur électrique i et $\delta_i(t)$ le coefficient d'activation du générateur électrique i qui vaut 1 lorsque ledit générateur électrique est allumé et 0 lorsque ledit générateur électrique est éteint :

   - une étape (2E1) de détermination de la puissance optimale $P_i^{opt}(t)$ à l'instant t associée à chaque générateur électrique $i$ de sorte à minimiser la consommation de carburant par unité d'énergie électrique produite $sfc(t) = \frac{1}{P_{tot}(t)} \sum_{i=1}^{N} f_i(P_i(t)) \times P_i(t)$ avec $f_i(x)$ la fonction donnant la consommation en carburant du générateur électrique $i$ pour la puissance électrique x noté $sfc^{opt}$;
   - une étape (2E2) de détermination de la consommation de carburant par unité d'énergie électrique produite $sfc(t) = \frac{1}{P_{tot}(t)} \sum_{i=1}^{N} f_i(P_i(t)) \times P_i(t)$ notée $sfc^{eq}$ et associée à une répartition équitable de la puissance électrique fournie par chaque générateur, ladite répartition étant telle que $\forall i \in [1, N]$ ; $P_i(t) \le r_i P_i^{max}$ avec $r_i$ la fraction de la puissance maximale telle que $\forall i$ ; $r_i \in ]0,1]$ ;
   - une étape (2E3) de détermination de la puissance $P_i(t)$ associé à chaque générateur en fonction de la valeur de $sfc^{eq}$ et $sfc^{opt}$.

2. Procédé (200) selon la revendication précédent dans lequel la fraction de puissance maximale d'un générateur est choisi de sorte que $\min(f_i) = f_i(r_i P_i^{max})$ où $f_i(x)$ la fonction donnant la consommation en carburant par unité d'énergie électrique produite du générateur électrique i pour la puissance électrique x.

3. Procédé (200) selon l'une des revendications précédentes dans lequel chaque générateur i est associé à une puissance minimale $P_i^{min}$.

4. Procédé (200) selon l'une des revendications précédentes dans lequel chaque générateur électrique i est associé à une température $T_i(t)$, la vairation de cette température à l'instant t étant donnée par $\frac{dT_i(t)}{dt} = g_i(P_i(t), T_i(t))$

où $g_i(x,y)$ est une fonction qui donne la variation de température du générateur i en fonction de la puissance *x* fournie par ledit générateur i et de la température y dudit générateur, ladite température étant prise en compte lors l'étape de détermination de la puissance $P_i(t)$ associé à chaque générateur.

**5.** Procédé (200) selon l'une revendications précédentes dans lequel l'étape de détermination de la puissance $P_i(t)$ associée à chaque générateur comprend :

- une sous-étape de détermination du le rapport $\frac{sfc^{eq}}{sfc^{opt}}$ ; et

- lorsque le rapport $\frac{sfc^{eq}}{sfc^{opt}}$ est supérieur à un seuil prédéfinie, une sous-étape de détermination de la puissance associé à chaque générateur $P_i(t)$ conforme à la répartition équitable de la puissance fournie,

- sinon, une sous-étape de détermination de la puissance associée à chaque générateur $P_i(t)$ conforme la répartition optimale de puissance fournie.

**6.** Procédé (300) de pilotage de N générateurs électriques comprenant une première étape de mise en œuvre d'un procédé de détermination des paramètres de pilotage de N générateurs électriques selon l'une des revendications précédentes et une deuxième étape d'envoi des paramètres ainsi déterminés auxdits N générateurs électriques.

**7.** Procédé (400) de pilotage de N générateurs électriques comprenant une première phase (PI) d'initialisation lors de laquelle le procédé selon l'une des revendications 1 à 5 est mis en œuvre une pluralité de fois, chaque mise en œuvre étant effectuée avec des valeurs de puissance demandée P$_{tot}$(t) et de puissance de réserve P$_{reserve}$(t) différentes de sorte à obtenir ladite table de correspondance et une deuxième phase (PP) de pilotage lors de laquelle des paramètres de pilotage sont envoyés auxdits N générateurs électriques, lesdits paramètres de pilotage étant déterminés à l'aide de la table de correspondance.

**8.** Procédé de pilotage selon l'une des deux revendications précédente dans lequel, lorsque les paramètres de pilotage déterminés supposent une transition d'une répartition équitable à une répartition optimale, ladite transition est soumise à la validation d'un opérateur, les paramètres correspondant à une répartition équitable étant utilisés tant que la validation par l'opérateur n'est pas effectuée.

**9.** Système de pilotage comprenant des moyens de mettre en œuvre les étapes du procédé (200, 300, 400) selon l'une des revendications 1 à 8.

**10.** Programme d'ordinateur comprenant des instructions qui, lorsque le programme est exécuté par un ordinateur, conduisent celui-ci à mettre en œuvre les étapes du procédé (200, 300, 400) selon l'une des revendications 1 à 8.

**11.** Support de données lisible par ordinateur, sur lequel est enregistré le programme d'ordinateur selon la revendication 10.

**Patentansprüche**

**1.** Bestimmungsverfahren (200) der Steuerparameter von N elektrischen Generatoren zu einem Zeitpunkt t, wobei das genannte Verfahren für eine angeforderte Leistung $P_{tot}(t) = \sum_{i=1}^{N} P_i(t)$ zu einem Zeitpunkt t mit $P_i(t)$ die elektrische Leistung, die vom elektrischen Generator i zum Zeitpunkt t geliefert wird, und eine Reserveleistung $P_{reserve}(t) \leq \sum_{i=1}^{N}(P_i^{max} - P_i(t)) \times \delta_i(t)$ zu einem Zeitpunkt t mit $P_i^{max}$ als die maximale Leistung, die der elektrische Generator *i* entwickeln kann, und $\delta_i(t)$ den Aktivierungskoeffizienten des elektrischen Generators *i*, der den Wert 1 hat, wenn der elektrische Generator eingeschaltet ist, und 0, wenn der genannte elektrische Generator ausgeschaltet ist, umfasst:

- einen Bestimmungsschritt (2E1) der optimalen Leistung $P_i^{opt}(t)$ zum Zeitpunkt t, der jedem elektrischen Generator *i* derart zugeordnet wird, dass der Kraftstoffverbrauch durch eine produzierte elektrische Energie-

$$sfc(t) = \frac{1}{P_{tot}(t)} \sum_{i=1}^{N} f_i(P_i(t)) \times P_i(t)$$

einheit minimiert wird, wobei $f_i(x)$ die Funktion ist, die den Kraftstoffverbrauch des elektrischen Generators $i$ für die elektrische Leistung x angibt, die mit $sfc^{opt}$ bezeichnet wird;

- einen Bestimmungsschritt (2E2) des Kraftstoffverbrauchs durch eine produzierte elektrische Energieeinheit

$$sfc(t) = \frac{1}{P_{tot}(t)} \sum_{i=1}^{N} f_i(P_i(t)) \times \quad P_i(t),$$

bezeichnet mit $sfc^{eq}$ und einer gleichmäßigen Verteilung von der von jedem Generator gelieferten elektrischen Leistung, wobei die genannte Verteilung derart ist, dass

$$P_i(t) \le r_i P_i^{max},$$

$\forall i \in [1, N]$ ; wobei $r_i$ die Fraktion der maximalen Leistung, wie z. B. $\forall i$ ; $r_i \in \,]0,1]$ ist;

- einen Bestimmungsschritt (2E3) der Leistung $P_i(t)$, der jedem Generator in Abhängigkeit von dem Wert von $sfc^{eq}$ und $sfc^{opt}$ zugeordnet wird.

2. Verfahren (200) gemäß dem voranstehenden Anspruch, bei dem die maximale Leistungsfraktion eines Generators derart ausgewählt wird, dass $\min(f_i) = f_i(r_i P_i^{max}),$ wobei $f_i(x)$ die Funktion ist, die den Kraftstoffverbrauch durch die produzierte elektrische Energieeinheit des elektrischen Generators $i$ für die elektrische Leistung $x$ angibt.

3. Verfahren (200) gemäß einem der voranstehenden Ansprüche, bei dem jeder Generator $i$ einer Mindestleistung $P_i^{min}$ zugeordnet wird.

4. Verfahren (200) gemäß einem der voranstehenden Ansprüche, bei dem jeder elektrische Generator $i$ einer Temperatur $T_i(t)$ zugeordnet wird, wobei die Abweichung dieser Temperatur zum Zeitpunkt t mit

$$\frac{dT_i(t)}{dt} = g_i\big(P_i(t), T_i(t)\big)$$

angegeben wird, wobei $g_i(x,y)$ eine Funktion ist, die die Temperaturabweichung des Generators $i$ in Abhängigkeit von der Leistung x, die von dem genannten Generator $i$ geliefert wird, und der Temperatur y des genannten Generators angibt, wobei die genannte Temperatur beim Bestimmungsschritt der Leistung $P_i(t)$ berücksichtigt wird, der jeder Generator zugeordnet wird.

5. Verfahren (200) gemäß einem der voranstehenden Ansprüche, bei dem der Bestimmungsschritt der jedem Generator zugeordneten Leistung $P_i(t)$ umfasst:

   - einen Bestimmungsteilschritt des Verhältnisses $\frac{sfc^{eq}}{sfc^{opt}}$ ; und

   - wenn das Verhältnis $\frac{sfc^{eq}}{sfc^{opt}}$ höher ist als ein vorbestimmter Grenzwert, einen Bestimmungsteilschritt der Leistung, die gemäß der gleichmäßigen Verteilung der gelieferten Leistung jedem Generator $P_i(t)$ zugeordnet wird,

   - andernfalls einen Bestimmungsteilschritt der Leistung, die jedem Generator $P_i(t)$ gemäß der optimalen Verteilung von gelieferter Leistung zugeordnet wird.

6. Steuerverfahren (300) von $N$ elektrischen Generatoren, umfassend einen ersten Umsetzungsschritt eines Bestimmungsverfahrens der Steuerparameter von N elektrischen Generatoren gemäß einem der voranstehenden Ansprüche und einen zweiten Versandschritt der auf diese Weise bestimmten Parameter an die genannten $N$ elektrischen Generatoren.

7. Steuerverfahren von $N$ elektrischen Generatoren, umfassend eine erste Initialisierungsphase (PI), bei der das Verfahren gemäß einem der Ansprüche 1 bis 5 eine Vielzahl von Malen umgesetzt wird, wobei jede Umsetzung mit unterschiedlichen Werten einer angeforderten Leistung $P_{tot}(t)$ und einer Reserveleistung $P_{reserve}(t)$ derart ausgeführt wird, dass die genannte Entsprechungstabelle und eine zweite Steuerphase (PP) erhalten werden, bei der Steuerparameter an die genannten $N$ elektrischen Generatoren gesandt werden, wobei die genannten Steuerparameter mithilfe der Entsprechungstabelle bestimmt werden.

8. Steuerverfahren gemäß einem der zwei voranstehenden Ansprüche, bei dem, wenn die bestimmten Steuerparameter einen Übergang von einer gleichmäßigen Verteilung zu einer optimalen Verteilung implizieren, der genannte Übergang der Bestätigung durch einen Betreiber unterliegt, wobei die Parameter, die einer gleichmäßigen Verteilung entsprechen, solange verwendet werden, wie die Bestätigung durch den Betreiber nicht durchgeführt wird.

9. Steuersystem, umfassend Umsetzungsmittel der Schritte des Verfahren (200, 300, 400) gemäß einem der Ansprüche 1 bis 8.

10. Computerprogramm, umfassend Anweisungen, die, wenn das Programm von einem Computer ausgeführt wird, dieses dazu veranlassen, die Schritte des Verfahrens (200, 300, 400) gemäß einem der Ansprüche 1 bis 8 umzusetzen.

11. Computerlesbarer Datenträger, auf dem das Computerprogramm gemäß Anspruch 10 gespeichert ist.

**Claims**

1. Method (200) for determining parameters for controlling N electric generators at an instant $t$, said method comprising, for a required power $P_{tot}(t) = \sum^{N}_{i=1} P_i(t)$ at an instant $t$ with $P_i(t)$ the electric power supplied by the electric generator i at the instant $t$ and a reserve power $P_{reseve}(t) \leq \sum^{N}_{i=1}(P_i^{max}-P_i(t)) \times \delta_i(t)$ at an instant $t$ with $P_i^{max}$ the maximum power that the electric generator i can develop and $\delta_i(t)$ the coefficient of activation of the electric generator i which is equal to 1 when said electric generator is on and 0 when said electric generator is off:

   - a step (2E1) of determining the optimal power $P_i^{opt}(t)$ at the instant $t$ associated with each electric generator i so as to minimise the fuel consumption per unit of electrical energy produced $sfc(t) = \frac{1}{Ptot(t)} \sum^{N}_{i=1} f_i(P_i(t)) \times P_i(t)$ with $f_i(x)$ the function giving the fuel consumption of the electric generator i for the electric power x noted as $sfc^{opt}$;
   - a step (2E2) of determining the fuel consumption per unit of electrical energy produced $sfc(t) = \frac{1}{Ptot(t)} \sum^{N}_{i=1} f_i(P_i(t)) \times P_i(t)$ noted as $sfc^{eq}$ and associated with a balanced distribution of the electric power supplied by each generator, said distribution being such that $\forall i \in [1,N]; P_i(t) \leq r_i P_i^{max}$ with $r_i$ the fraction of the maximum power such that $\forall I; r_i \in ]0,1]$;
   - a step (2E3) of determining the power $P_i(t)$ associated with each generator as a function of the value of $sfc^{eq}$ and $sfc^{opt}$.

2. Method (200) according to the preceding claim wherein the maximum power fraction of a generator is chosen in such a way that $min(f_i) = f_i(r_i P_i^{max})$ where $f_i(x)$ is the function giving the fuel consumption per unit of electrical energy produced of the electric generator $i$ for the electric power x.

3. Method (200) according to one of the preceding claims wherein each generator $i$ is associated with a minimum power $P_i^{min}$.

4. Method (200) according to one of the preceding claims wherein each electric generator $i$ is associated with a temperature $T_i(t)$, the variation of this temperature at the instant t being given by $\frac{dT_i(t)}{dt} = g_i(P_i(t), T_i(t))$ where $g_i(x, y)$ is a function that gives the temperature variation of the generator i as a function of the power $x$ supplied by said generator i and of the temperature y of said generator, said temperature being taken into account during the step of determining the power $P_i(t)$ associated with each generator.

5. Method (200) according to one of the preceding claims wherein the step of determining the power $P_i(t)$ associated with each generator comprises:

- a substep of determining the ratio $\frac{sfc^{eq}}{sfc^{opt}}$, and

- when the ratio $\frac{sfc^{eq}}{sfc^{opt}}$ is greater than a predefined threshold, a substep of determining the power associated with each generator $P_i(t)$ in accordance with the balanced distribution of the power supplied,

- otherwise, a substep of determining the power associated with each generator $P_i(t)$ in accordance with the optimal distribution of the power supplied.

6. Method (300) for controlling $N$ electric generators comprising a first step of implementing a method for determining parameters for controlling $N$ electric generators according to one of the preceding claims and a second step of sending the parameters thus determined to said $N$ electric generators.

7. Method (400) for controlling $N$ electric generators comprising a first phase (PI) of initialisation during which the method according to one of claims 1 to 5 is implemented a plurality of times, each implementation being carried out with different values of required power $P_{tot}(t)$ and of reserve power $P_{reserve}(t)$ in such a way as to obtain said correspondence table and a second phase (PP) for controlling during which parameters for controlling are sent to said $N$ electric generators, said parameters for controlling being determined using the correspondence table.

8. Method for controlling according to one of the two preceding claims wherein, when the determined parameters for controlling assume a transition from a balanced distribution to an optimal distribution, said transition is subjected to the validation of an operator, the parameters corresponding to a balanced distribution being used as long as the validation by the operator is not carried out.

9. System for controlling comprising means for implementing the steps of the method (200, 300, 400) according to one of claims 1 to 8.

10. Computer program comprising instructions that, when the program is executed by a computer, lead the latter to implement the steps of the method (200, 300, 400) according to one of claims 1 to 8.

11. Data support that can be read by a computer, on which is recorded the computer program according to claim 10.

$P_{tot}(t)$ →

$$f_1 \ldots f_i \ldots f_N$$

$$P_1^{max} \ldots P_i^{max} \ldots P_N^{max}$$

$P_{reserve}(t)$ →

→ $P_1(t)$
...
$P_i(t)$
...
$P_N(t)$

## FIG. 1

100

SE1

↓

SE2

↓

SE3

## FIG. 2

FIG. 3

FIG. 4

FIG. 5

200

FIG. 6

FIG. 7

FIG. 8

FIG. 9

300

3E1

SE1

SE2

SE3

3E2

FIG. 10

400

PI

SE1

SE2

SE3

PP

FIG. 11

FIG. 12

FIG. 13

FIG. 14

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2014152007 A1